Europäisches Patentamt

European Patent Office

Office européen des brevets

(19)

(11) Veröffentlichungsnummer : **0 398 964 B1**

(12) **EUROPÄISCHE PATENTSCHRIFT**

(45) Veröffentlichungstag der Patentschrift :
**01.04.92 Patentblatt 92/14**

(21) Anmeldenummer : **89902226.3**

(22) Anmeldetag : **30.01.89**

(86) Internationale Anmeldenummer :
**PCT/DE89/00056**

(87) Internationale Veröffentlichungsnummer :
**WO 89/07193 10.08.89 Gazette 89/18**

(51) Int. Cl.⁵ : **F02B 19/02, F02M 53/06**

---

(54) **VERFAHREN ZUM BETREIBEN EINER EIN- ODER MEHRZYLINDERBRENNKRAFTMASCHINE.**

---

(30) Priorität : **29.01.88 DE 3802669**

(43) Veröffentlichungstag der Anmeldung :
**28.11.90 Patentblatt 90/48**

(45) Bekanntmachung des Hinweises auf die
Patenterteilung :
**01.04.92 Patentblatt 92/14**

(84) Benannte Vertragsstaaten :
**AT BE CH DE FR GB IT LI LU NL SE**

(56) Entgegenhaltungen :
**EP-A- 0 159 195**
**WO-A-84/00994**
**FR-A- 400 960**

(56) Entgegenhaltungen :
**FR-A- 2 410 744**
**FR-A- 2 483 010**
**US-A- 4 082 067**
**US-A- 4 342 300**

(73) Patentinhaber : **Saleh, Abdel Halim, Dr. Ing.**
**Ziegelfeldstrasse 4**
**W-7890 Waldshut (DE)**

(72) Erfinder : **Saleh, Abdel Halim, Dr. Ing.**
**Ziegelfeldstrasse 4**
**W-7890 Waldshut (DE)**

(74) Vertreter : **Weiss, Peter, Dr. rer.nat.**
**Patentanwalt Dr. Peter H. Weiss Postfach 12**
**50 Zeppelinstrasse 4**
**W-7707 Engen (DE)**

---

**Beschreibung**

Die Erfindung betrifft ein Verfahren zum Betreiben einer Ein- oder Mehrzylinderbrennkraftmaschine, insbesondere mit selbstzündendem Kraftstoff, wobei dosierter Kraftstoff vor der Zufuhr zu einem Brennraum in einen (hermetisch) geschlossenen Verdampfungsraum eingespritzt wird, sowie eine Vorrichtung zum Einbringen dieses dosierten zugeführten Kraftstoffes.

Insbesondere Dieselkraftstoff wird in Viertakt-Verbrennungsmotoren durch direkte Einspritzung in den Verbrennungsraum gegen Ende des Verdichtungshubes der komprimierten Luft zugeführt und im Laufe des Arbeitshubes verbrannt. Zu Beginn der Verbrennung steigt der Druck zunächst an und erreicht im Laufe des Arbeitshubes sein Maximum.

Im weiteren Verlauf der Verbrennung während des Arbeitshubes sinkt der Druck kontinuierlich ab. Die Abgase werden im Ausschubhub in die Umwelt ausgestoßen. Die Qualität der Verbrennung und damit der Umfang der Schadstoffemission ist direkt von der Qualität der Verbrennung innerhalb des Brennraumes abhängig. Diese wiederum wird vom mittleren Durchmesser der Tropfen beim Zerstäuben oder in Dampfform und deren Verteilung bestimmt. Aus diesem Grunde wird bei den bekannten Einspritzdüsen der Kraftstoff vor der Zerstäubung unter hohem Druck komprimiert. Um möglichst kleine und gleich große Tropfen zu erzeugen, sind hohe Zerstäubungsdrücke (bis zu 1.500 bar) erforderlich. Diese hohen Drücke erfordern jedoch starke und kompliziert aufgebaute Zerstäuberdüsen, welche wiederum einem starken Verschleiß ausgesetzt sind. Zudem haben neuere Untersuchungen festgestellt, daß bei den Zerstäuberdüsen der mittlere Tropfendurchmesser eine untere Grenze besitzt, welche durch Kollision und Wiedervereinigung zu großen Tropfen bestimmt ist.

Trotz Anwendung von Mehrlochdüsen ist die Verteilung von Kraftstofftropfen bei der Zerstäubung ungenügend. Aus diesem Grunde wird gefordert, bei Vollast mit einem höheren Luftverhältnis als 1 zu arbeiten. Dementsprechend ist die Motorleistung unbefriedigend.

Ferner haben die Einspritz- und Verbrennungsdauer einen großen Einfluß auf die Leistung des Motors, da sich die Verbrennung weit in den Arbeitshub hinein erstreckt.

Die starke Abhängigkeit der Schadstoffemission, wie HC, CO und Ruß, von der Zerstäubungsqualität und die Schwierigkeiten, die oben erwähnten Nachteile zu beseitigen, haben zur Anwendung anderer Verfahren geführt, wie beispielsweise der Film- und Vorkammerverbrennung, Glühkerzenvorwärmung und Zündungsverbrennung oder zur Anwendung der Abgasrückführung in direkt einspritzenden Dieselmotoren. Diese Maßnahmen sorgen für einen mehr oder weniger geringen Anteil von Verdampfung des Kraftstoffes vor der Verbrennung, wobei die zu dieser Verdampfung benötigte Wärme zunächst aus Glühkerzen oder umgebenden Wänden entzogen wird. Da die für die Verdampfung verfübbare Zeit sehr kurz ist, ist der so erzielte Anteil an verdampftem Kraftstoff und dementsprechend die Verbesserung der Abgasqualität äußerst gering. Außerdem ist ein komplizierter Aufbau uni eine Einbuße an Leistung unvermeidlich.

Damit die Rußemission die vorsegebenen gesetzlichen Grenzwerte einhält, ist in diesen herkömmlichen Systemen eine Nachverbrennung mit Hilfe von Katalysatoren erforderlich geworden. Die Minderung der Leistung um 10% bis 20%, die Kaltanfahrtbeschleunigung und eine Zunahme des Kraftstoffverbrauches sind dabei unvermeidlich. Eine Anwendung des sogenannten Super-Diesel-Kraftstoffes, wie er seit kurzem von der Mineralölindustrie angeboten wird, hat nach neuesten Messungen kaum eine Wirkung auf die Reduzierung von Rußemissionen gezeigt.

Es sind schon mehrfach Vorschläge zum Verdampfen von Kraftstoff vor seiner Zufuhr zum Brennraum gemacht worden. So zeigt beispielsweise die EP-A 159 195 einen dem Brennraum vorgeschalteten Vorwärmungsraum mit elektrischer Erwärmung, wobei der in dem Vorwärmungraum vorgewärmte Kraftstoff bei geöffnetem Ventil in den Zylinder einer Otto-Brennkraftmaschine verdunstet. Dieses Verdunsten geschieht selbstverständlich relativ langsam, so daß das Ventil zur Brennkammer hin lange geöffnet werden muß.

In der FR-A 400 960 ist eine Brennkraftmaschine aufgezeigt, in der ein Einspritzventil durch eine Klappe im Zusammenwirken mit dem Einspritzgehäuse gebildet und durch den Überdruck des Kraftstoffes oder den Saugdruck im Zylinder betätigt wird. Hierdurch ist keine geregelte Einbringung des verdampften Kraftstoff-Luft-Gemisches in den Brennraum möglich.

Die US-A-4 342 300 zeigt eine Schichtlade-Brennkraftmaschine, wobei ein Ventil zwischen Gemischvorbereitungsraum uni Brennraum im Laufe des Arbeitshubes kurz geöffnet wird, damit heiße, brennende Gase aus dem Brennraum in den Gemischvorbereitungsraum hineinströmen können. Zum Ausblasen des vorbereiteten Gemisches wird dieses Ventil im Laufe des Verdichtungshubes geöffnet und noch vor der Zündung des Kraftstoffes am Ende des Verdichtungshubes wieder geschlossen. Das bedeutet aber, daß ein Teil des Volumens des Gemischvorbereitungsraumes bereits von heißen Gasen aus dem Brennraum gefüllt ist und deswegen nur zu einem geringeren Teil mit neuem Kraftstoff, der dann in relativ kurzer Zeit verdampfen muß, gefüllt werden kann. Die Zeit, die dem Kraftstoff zum Verdampfen verbleibt, ist hier relativ kurz.

Ähnliches gilt auch für die WO-A-8 400 994. Auch hier wird vor der Zufuhr in den Brennraum der Kraftstoff

EP 0 398 964 B1

in einen Verdampfungsraum eingespritzt, der zuvor während der Verbrennung offen gehalten wurde und daher als ein Teil des Verbrennungsraumes wirkt. Hierdurch schließt der Verdampfungsraum Abgase ein, welche zum Schließzeitpunkt nach Ablauf der Verbrennung den gleichen Druck und die gleiche Temperatur aufweisen, wie sie im Brennraum herrschen. Auch hier muß der Kraftstoff bereits gegen den im Verdampfungsraum vorherrschenden Druck eingespritzt werden, wodurch sowohl sein Einspritzen erschwert als auch sein Mengenanteil vermindert wird.

Im übrigen ist bei der WO-A-8 400 994 dem Verdampfungsraum eine eigene Zündkerze zugeordnet, so daß die Zündung je nach Wunsch entweder durch die Zündkerze im Brennraum oder diejenige im Verdampfungsraum stattfindet.

Aufgabe der vorliegenden Erfindung ist es, diese beschriebenen Nachteile zu beheben und vor allem die Abgasqualität zu verbessern, eine höhere Leistung des Motors, inbesondere eine höhere Liter-Leistung zu erzielen und einen robusteren, von einer Zerstäubungsqualität, Einspritzzeit und -dauer unabhängigen Betrieb einer Brennkraftmaschine zu erreichen.

Zur Lösung dieser Aufgabe führt ein Verfahren der oben genannten Art, bei dem der Kraftstoff in dem Verdampfungsraum für die Dauer fast eines ganzen Kreisprozesses Verbleibt und verdampft wird, jedoch wurz vor Ende des Verdichtungshubes in den Brennraum durch Öffnen eines Ventils zwischen Verdampfungsraum und Brennraum entlassen wird, und daß das Ventil zwischen Verdampfungsraum und Brennraum noch vor der Zündung des Kraftstoffes am Ende des Verdichtungshubes wieder geschlossen wird und erst zum Ausblasen im nächsten Kreisprozeß geöffnet wird.

Hierdurch wird gewährleistet, daß das Volumen des Verdampfungsraumes nicht mit Brenngasen nach der Zündung zum Teil gefüllt wird, sondern ausschließlich neuer Kraftstoff bzw. Kraftstoffdampf zur Verfügung steht. Sowohl das Einspritzen von Kraftstoff wird erleichtert. ferner lagert sich kein Kraftstoff an Rußpartikeln in größerer form an, so daß dem Brennraum nur verdampfter Kraftstoff in feinst verteilter form zugeführt wird. Dieser feinst verteilte, verdampfte Kraftstoff verbrennt schnell und weitestgehend ruß- bzw. schadstoffarm. Die vollständige Verdampfung ist vor allem auf die relativ lange Verweildauer des kraftstoffes in dem Verdampfungsraum zurückzuführen. Die Verweildauer beträgt beinahe 720 Kurbelwellenwinkel. Die Dosierung des Kraftstoffes, welche in den Verdampfungsraum eingespritzt wird, erfolgt je nach Motortyp.

Dem im Verdampfungsraum eingeschlossenen Kraftstoff muß zum Zwecke der Verdampfung in irgendeiner Form Wärme zugeführt werden, wobei die dafür erforderliche Wärmemenge je nach Verwahren etwa 1,5 bis 2,5 des Heizwertes des Kraftstoffes beträgt. Zum einen ist daran gedacht, komprimiertes Gas aus dem Brennraum einem Speicherraum zuzuführen, welcher die Verdampfungskammer ummantelt. Über die Wand zwischen Speicherraum und Verdampfungsraum wird die Wärme übertragen. Bevorzugt erfolst das Einbringen des komprimierten Gases in den Speicherraum zu dem Zeitpunkt, in welchem im Brennraum selbst der maximale Druck und die maximale Temperatur herrscht. Dieselben Eigenschaften werden dem Gas in den Speicherraum mitgegeben.

Da das Gas in dem Speicherraum seine Wärme an den Verdampfungsraum abgibt, kühlt es ab, so daß das angekühlte Gas vor dem Einlaß des neuen, heißen Gases bei einem neuen Kreislauf aus dem Speicherraum entlassen werden sollte. Aus diesem Grund wird der Speicherraum mit Beginn des Verdichtungshubes des nachfolgenden Kreislaufprozesses kurzzeitig zur Entleerung geöffnet.

Ferner soll der Innendruck des Verdampfungsraumes erhöht werden. Damit ist eine Erhöhung des Innendruckes zusätzlich zu der Druckerhöhung durch die Verdampfung des Kraftstoffes selbst gemeint. Bevorzugt wird dem Verdampfungsraum ein den Kammerinnendruck erhöhendes Medium aus einem Speicherraum od. dgl. zugeführt. Dieser Speicherraum kann separat von dem Verdampfungsraum angeordnet sein und auch getrennt von dem Verbrennungskreislauf des Motors versorgt werden. In der Regel wird als druckerhöhendes Medium ein Gas zu verwenden sein.

In einer bevorzugten Ausführungsform erfolgt jedoch das Zuführen des druckerhöhenden Mediums direkt aus dem Brennraum über entsprechende Ventile, wobei somit das Medium komprimierte frischluft und/oder komprimierte Abgase sind.

In einer besonderen Ausführungsform zer Erfindung wirz dagegen ein inertes Gas oder ein Wasserdampf unter hohem Druck von außen dem Verdampfungsraum zugeführt. Dies wird vorwiegend bei Großmotoren meist im sogenannten Stationärbetrieb Anwendung finden, jedoch ist es auch für große LKW-Motoren gedacht.

Eine entsprechende Vorrichtung zum Einbringen von insbesondere selbstzündendem Kraftstoff in einen Brennraum einer Einoder Mehrzylinderbrennkraftmaschine mittels einer Einspritzdüse für dosiert zugeführten Kraftstoff weist zwischen der Einspritzdüse und dem Brennraum einen Verdampfungsraum auf. Dosierter Kraftstoff gelangt über ein Ventil aus der Einspritzdüse in zen Verdampfungsraum, während eine Ausblasöffnung aus dem Verdampfungsraum zum Brennraum hin ebenfalls durch ein Ventil verschließbar ist. Dabei sollen sowohl das eine Ventil wie auch das Ausblasventil durch eine Düsennadel im Zusammenwirken mit dem Einspritzgehäuse und dem Verdampfungsgehäuse gebildet sein.

Diese Koppelung der beiden Ventile ist selbstverständlich aus räumlichen Gründen nur dann ratsam, wenn auch Einspritzdüse und Verdampfungsraumgehäuse miteinander kombiniert sind. Erfindungsgemäß dient hierfür eine Düsennadel, welche zusammen mit dem Einspritzdüsengehäuse das eine Ventil und zusammen mit dem Verdampfungsraumgehäuse das andere Ventil bildet. Diese Düsennadel durchsetzt mit einem Nadelkolben den Verdampfungsraum und verschließt mit einer Nadelspitze die Ausblasöffnung. Andererseits greift der Nadelkolben auch in das Einspritzdüsengehäuse ein und ist dort in einer Durchgangsbohrung geführt. Diese Durchgangsbohrung erweitert sich nach einer Steuerkante trichterförmig, so daß Einspritznuten, welche in den Nadelkolben eingeformt sind, nach dem Überfahren der Steuerkante eine Verbindung zwischen einem Raum für flüssigen Kraftstoff und dem Verdampfungsraum herstellen. Durch die axiale Verschiebung dieser Einspritznut kann der Zeitpunkt gesteuert werden, bei welchem die Einspritzung in den Verdampfungsraum erfolgt. Deshalb ist es möglich, daß zuerst das Ausblasventil durch Abheben der Nadelspitze öffnet und so der bereits verdampfte Kraftstoff in den Brennraum ausgeblasen werden kann. Eist nach einem weiteren Verschieben der Düsennadel erfolgt ein Öffnen des Ventils zum Einspritzen von dosiert zugeführten flüssigen Kraftstoff.

Ferner soll dem Nadelkolben nach der Steuerkante eine Hülse aufgeschoben sein, die zur Steuerkante hin eine konische Abschrägung aufweist. Die konische Abschrägung entspricht bezüglich ihrer Außenkonturen der trichterförmigen Erweiterung, so daß durch Abschrägung und Erweiterung das zweite Ventil gebildet wird.

Bevorzugt steht der dosiert zugeführte flüssige Kraftstoff in einer Ringkammer vor dem zweiten Ventil an, wobei diese Ringkammer den Nadelkolben bzw. die Hülse umgibt. Hierbei ist innerhalb der Ringkammer entweder der Nadelkolben oder die Hülse bezüglich ihres Durchmessers erweitert, so daß die hierdurch erzeugte Abschrägung eine Druckfläche für den in die Ringkammer eindringenden Kraftstoff bildet. Hierdurch wird auf einfache Weise die Betätigung der Düsennadel möglich, da unter Druck eingeführter Kraftstoff auf die Druckfläche wirkt und die Düsennadel zum Öffnen der Ventile verschiebt. Das Verschieben geschieht in der Regel gegen den Druck einer Gegenfeder.

Bevorzugt soll sich jedoch auch die Hülse über eine Druck-oder Tellerfeder od. dgl. Kraftspeicher gegen einen mit dem Nadelkolben verbundenen Nadelschaft abstützen. Hierdurch werden Paßungenauigkeiten der beiden getrennten Ventile ausgeglichen.

In einem Ausführungsbeispiel ist daran gedacht, daß dieser hermetisch verschlossene Verdampfungsraum ausschließlich über die Ausblasöffnung mit dem Brennraum in Verbindung steht und nur eine weitere Verbindung über das beschriebene Ventil mit der Leitung für flüssigen Kraftstoff besitzt. Der Druck innerhalb des Verdampfungsraumes wird dann ausschließlich durch den verdampften Kraftstoff bestimmt und die erforderliche Wärme nur durch den Mantel des Verdampfungsraumgehäuses zugeführt.

In einer bevorzugten Ausführungsform steht dagegen der Verdampfungsraum zusätzlich noch mit einem Speicherraum für Frischluft und/oder Abgase in Verbindung. Dieser Speicherraum kann separat angeordnet sein, wobei er wiederum bevorzugt durch die Frischluft bzw. Abgase aus dem Brennraum gefüllt wird. Es ist jedoch auch daran gedacht, den Verdampfungsraum über ein Ventil direkt mit dem Brennraum zu verbinden, so daß Frischluft bzw. heiße Abgase dann in den Verdampfungsraum eindringen können, wenn der Druck des Brennraumes über demjenigen des Verdampfungsraumes liegt. Dies ist der Zeitpunkt, in dem der Verdampfungsraum entleert ist, dagegen im Brennraum der höchste Druck und die höchste Temperatur herrscht.

Des weiteren ist auch daran gedacht, in den Verdampfungsraum über einen entsprechenden Kanal heißen Wasserdampf einzuführen. Dieser heiße Wasserdampf vermischt sich mit dem verdampften Brennstoff und trägt zu einer besseren Verbrennung bei. Zur Erzeugung des heißen Wasserdampfes hat es sich als ratsam erwiesen, das Wasser vorher durch Teile der Abgasleitung zu führen, so daß die Abgaswärme zur Erhitzung des Wassers benutzt wird. Kurz vor dem Eindringen des Wasserdampfes in den Verdampfungsraum wird das heiße Wasser über eine Drosselstrecke geführt, so daß danach entspannter heißer Wasserdampf in den Verdampfungsraum gelangt.

In einem weiteren Ausführungsbeispiel der Erfindung ist der Verdampfungsraum von einem Speicherraum ummantelt, welcher über Öffnungen mit dem Brennraum in Verbindung steht. Diese Öffnungen sind durch entsprechende Ventile verschließbar. Ebenfalls zum Zeitpunkt des höchsten Druckes bzw. der höchsten Temperatur wird dieses Ventil geöffnet, so daß heiße Abgase in den Speicherraum gelangen können und so zu einer Erwärmung des Verdampfungsraumgehäuses beitragen. Sobald diese Gase abgekühlt sind, werden sie über das Ventil wieder in den Brennraum entlassen, bevor der Speicherraum neu mit heißen Abgasen gefüllt wird.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Fig. 1 eine diagrammartige Darstellung des Druckverlaufes in einem Brennraum eines Motorzylinders sowie in einem erfindungsgemäßen Luftspeicherraum nach dem sog. "Direkt"-Verfahren;

Fig. 2a eine diagrammartige Darstellung des Druckverlaufes in einem Brennraum eines Motorzylinders sowie in einem Verdampfungsraum nach dem sog. "Indirekt"-Verfahren;

Fig. 2b ein Diagramm über die Einspritzung eines Kraftstoff-Luft-Gemisches in den Verdampfungsraum

4

bzw. über den Druckverlauf in dem Luftspeicherraum;

Fig. 3 eine schematische Darstellung eines Teilbereiches eines Motorzylinders mit einer Vorrichtung zum Einbringen von Kraftstoff in einen Verbrennungsraum;

Fig. 4 - 8 weitere Ausführungsbeispiele von Darstellungen entsprechend Figur 3;

Fig. 9 eine Diagrammdarstellung des voraussichtlichen Druckverlaufes bei Anwendung des erfindungsgemäßen Verfahrens;

Fig. 10-13 verschiedene Ausführungsformen von erfindungsgemäßen Vorrichtungen zum Einbringen von Kraftstoff in einen Verbrennungsraum eines Motorzylinders;

Fig. 14 ein Diagramm zur Steuerung der Tätigkeit zwischen Verdampfungsraum und Brennraum;

Fig. 15-18 weitere Ausführungsbeispiele von Vorrichtungen zum Einbringen von Kraftstoff in einen Brennraum.

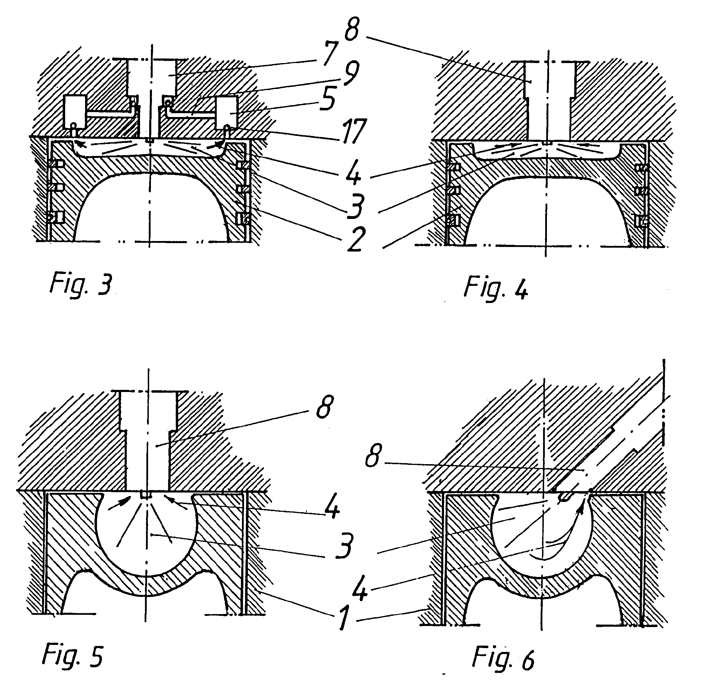

In den Figuren 3 bis 8 ist der Teilbereich eines Motorzylinders gezeigt, wobei mit 1 ein Zylinder angedeutet ist. In diesem Zylinder gleitet ein Kolben 2, wobei je nach Stellung des Kolbens 2 ein variabler Brennraum 3 gebildet wird.

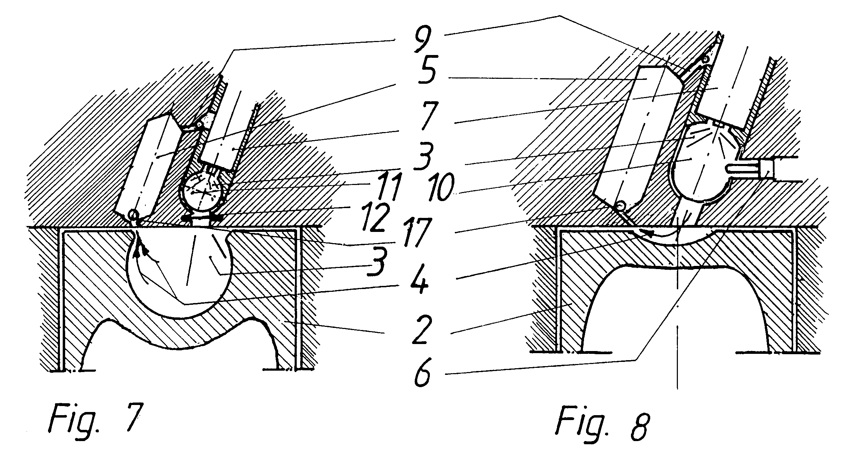

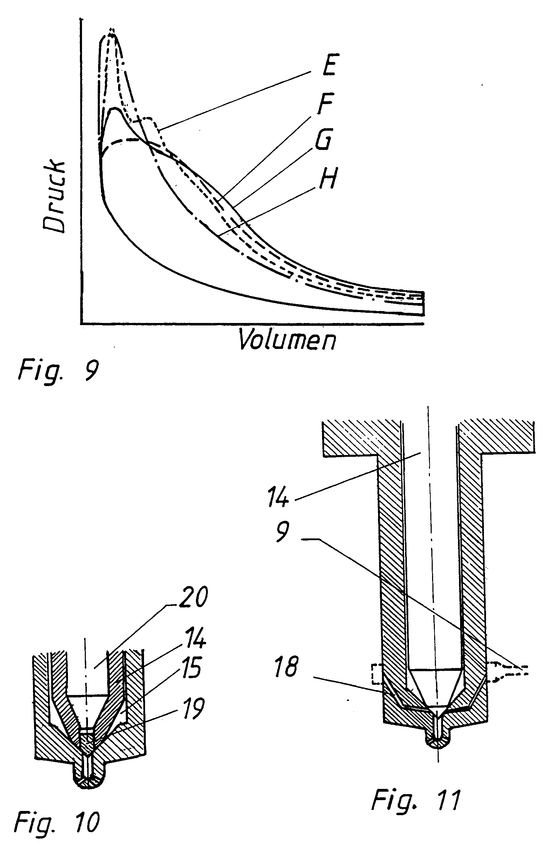

Diesem Brennraum 3 ist wiederum eine erfindungsgemäße Vorrichtung zum Einbringen von Kraftstoff zugeordnet, wobei es sich gemäß den Figuren 4 bis 6 um eine Einspritzdüse 8 handelt, während gemäß den Figuren 7 und 8 zwischen einer Einspritzdüse 7 und dem Brennraum 3 noch ein Verdampfungsraum 11 bzw. eine Vorkammer 10 eingeschaltet ist.

Mit 4 ist ein Frischluftstrom angedeutet, welcher beim Ansaugen des Kolbens 2 in den Brennraum 3 gelangt und beim Verdichten in einen Luftspeicherraum 5 (siehe Fig.3, 7 und 8) eingebracht wird. Der Luftspeicherraum 5 kann beliebig ausgestaltet sein. Gemäß Figur 3 ist er um die Düse 7 vorgesehen. Bei den Figuren 4 bis 6 befindet er sich in der Düse selbst, weshalb hier die Einspritzdüse die Bezugszahl 8 hat, nach den Figuren 7 und 8 ist er ein von der Düse getrennter Raum.

In Figur 8 ist ferner eine Glühkerze 6 der Vorkammer 10 zugeordnet. Eine eigentliche Zündkerze, welche die Zündung des entsprechenden Kraftstoffgemisches im Brennraum 3 bewirkt, ist nicht näher dargestellt.

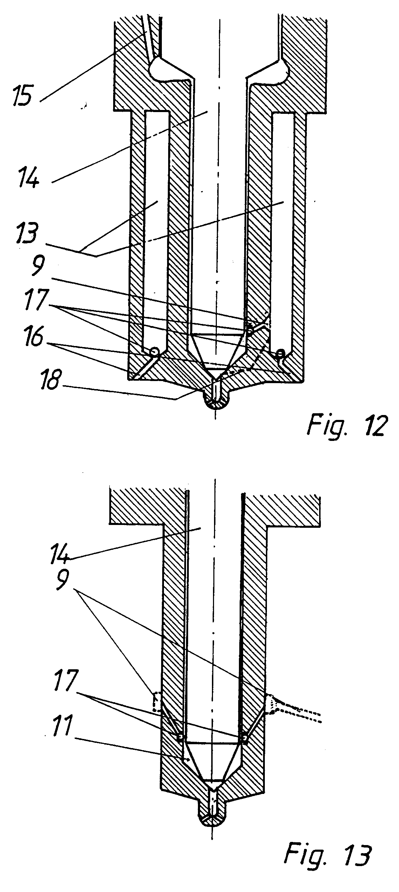

Vom Luftspeicherraum 5 führen gemäß den Figuren 3, 7 und 8 Einströmkanäle 9 zur Einspritzdüse 7 bzw. durch diese (ähnlich Fig. 13) in den verdampfungsraum 11 bzw. die vorkammer 10. Zum Brennraum 3 hin ist dagegen der Luftspeicherraum 5 durch ein entsprechendes Einweg-Durchflußventil 17 verschlossen. Ein weiteres Ausblasventil 12 kann sich gem. Fig. 7 zwischen dem Verdampfungsraum 11 und dem Brennraum 3 befinden.

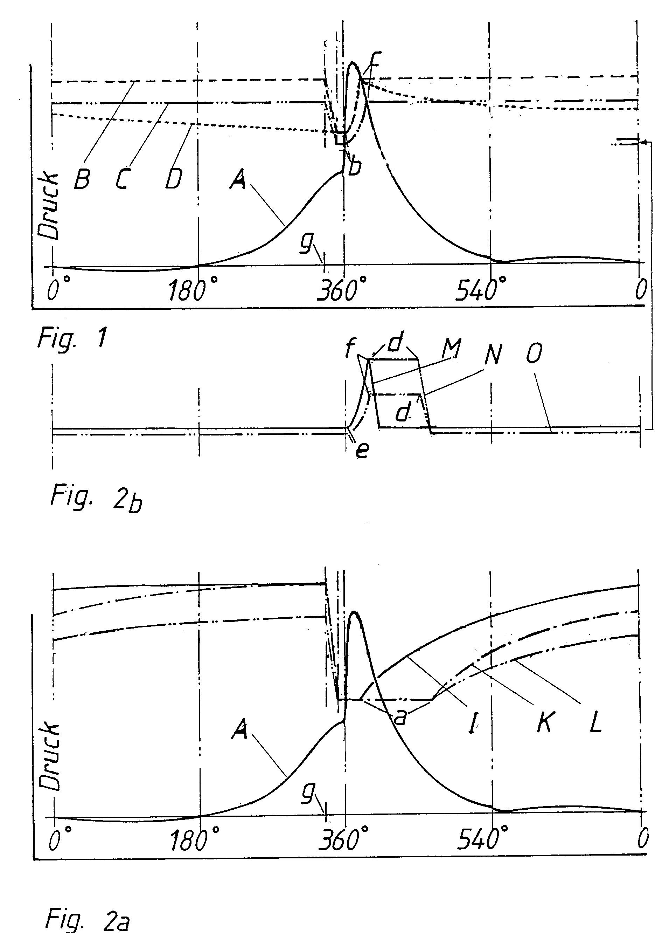

Grundlegend zur Erläuterung des vorliegenden erfindungsgemäßen Verfahrens ist der Druckverlauf der Gase in einem Brennraum, wie dies in Figur 1 und 2a mit der Kurve A dargestellt ist. Im Kurbelwellenwinkelbereich von 0° bis 180° findet der Saughub, im Winkelbereich von 180° bis 360° der Verdichtungshub, im Winkelbereich von 360° bis 540° der Arbeitshub und im Winkelbereich von 540° bis 720° der Ausschubhub statt. Beim Verdichtungshub steigt der Druck an. Kurz vor 360° erfolgt die Zündung, wobei nochmals durch die explosionsartige Verbrennung des Kraftstoffes im Brennraum der Druck erheblich zunimmt und nach Durchlaufen eines Maximums infolge der Bewegung des Kolbens nach unten und damit die Vergrößerung des Brennraumes 3 wieder abnimmt. Beim Ausschieben des Abgases zwischen 540° und 720° ist der Druck relativ niedrig.

In den Figuren 3 bis 6 und 8 ist ein sogenanntes "Direkt"-Verfahren gezeigt, bei dem ein Kraftstoff-Luft-Gemisch direkt in den Brennraum 3 eingespritzt wird. Während des Saughubes strömt Frischluft in den Zylinder 1 ein, welche dann im Verdichtungshub des Kolbens 2 komprimiert wird. Gegen Ende des Verdichtungshubes wird der Kraftstoff in Form eines vordosierten Strahles eingespritzt. Gemäß Figur 1 und 2a, Kurve A ist der maximale Druck im Brennraum 3 kurz nach Einsetzen der Verbrennung gegeben. In diesem Augenblick wird im Teilbereich von einem Punkt b bis zu einem Punkt c der Kurve A ein sehr geringer Teil der Frischluft außerhalb des Brennraumes 3 bzw. der Verbrennungszone des eingespritzten Strahles in einen Luftspeicherraum 5 eingedrückt, wie dies durch die entsprechenden Pfeile angedeutet ist. Der entsprechende Druckverlauf in dem Speicherraum 5 ist durch die Kurven B, C und D in Figur 1 angedeutet. Anschließend soll in dem hier gezeigten Ausführungsbeispiel diese gespeicherte Luft mit dem einzubringenden Kraftstoff vermischt werden. Dies geschieht gegen Ende des Verdichtungshubes etwa bei dem mit g gekennzeichneten Punkt.

Die gespeicherte Luft strömt in die Einspritzdüse 8 bzw. in den Verdampfungsraum 11 bzw. in die Vorkammer 10. Dort vermischt sie sich mit dem komprimierten, auszublasenden Kraftstoff. Beim Ausströmen der Luft aus dem Speicherraum sinkt selbstverständlich der Druck in dem Luftspeicherraum 5 ab, wobei die Höhe des Druckes in dem Speicherraum 5 von dem maximalen Druck im Zylinder wiederum abhängig ist.

Nach Ablauf des Arbeits- und Ausschubhubes wird erneut Frischluft angesaugt und im Verdichtungshub komprimiert.

Die Kurve B deutet den Druckverlauf im Speicherraum 5 bei Vollast im "Direkt"-Verfahren an, die Kurve C bei Teillast und die Kurve D ebenfalls bei Vollast im "Direkt"-Verfahren, jedoch bei langsamer Entleerung.

Demgemäß ist der Druck in dem Speicherraum 5 bei Vollast nach Kurve B höher als bei Teillast nach Kurve C. Nach Kurve D läuft die Luftzufuhr zur Einspritzdüse kontinuierlich und der Druck sinkt laufend ab.

Entsprechend dem "Direkt"-Verfahren gemäß den Figuren 3 bis 6 bildet sich so vor dem Eintritt in den Brennraum 3 ein Luft-Kraftstoff-Gemisch und bei dem Ausführungsbeispiel gemäß Figur 8 ein Luft-Kraftstoffdampf-Gemisch.

Beim Eintritt in den Brennraum 3 erreicht das Gemisch die kritische Strömungsgeschwindigkeit, wodurch das Gemisch in sehr feine, in der Verbrennungsluft homogen verteilte Kraftstofftropfen übergeht. Der mittlere Tropfendurchmesser ist, wie dies für die Schallzerstäubung bekannt ist, kleiner als 10 Mikrometer. Es wird eine Wolke aus sehr feinen, durch Luft voneinander getrennten Tropfen erzeugt. Dieser Zustand verhindert eine Kollision und Wiedervereinigung der Tropfen und führt zu einer sehr schnellen Verbrennung.

Der wolkenförmig aus der Einspritzdüse 8 ausströmende Gemischstrahl verursacht eine Zirkulationsströmung der komprimierten Luft im Brennraum 3. Dadurch wird bei Volllast die gesamte Luft von der Verbrennung erfaßt und so ein niedriges Luftverhältnis zugelassen, welches knapp über 1 liegt. Dies ergibt eine höhere Leistung pro Liter, insbesondere wenn das Verfahren bei Dieselmotoren mit Dieselkraftstoff Anwendung findet.

Dadurch, daß der Strahl der Einspritzdüse 8 ein größeres Volumen besitzt und aus fein zerstäubten, nebelförmig verteilten Tropfen besteht, wird nach Austritt des Strahls eine starke Verwirbelung im Brennraum 3 erzeugt. Der Brennraum 3 wird vor dem Verbrennen mit dem Kraftstoffnebel gefüllt. Die Verbrennung geht rasch voran, wesentliche schneller als bei den bekannten Verfahren zum Verbrennen von Dieselkraftstoff. Der entsprechende Vorgang ist in dem Diagramm nach Figur 9 dargestellt. Die Kurven E, F und G zeigen den Verbrennungskreisprozeß der Direkt-Einspritzung und des Vorkammerverfahrens. Die Kurve H stellt dagegen den zu erwartenden Verlauf nach dem erfindungsgemäßen Verfahren dar.

Im übrigen wird jeder Tropfen des Kraftstoffes von seiner Verbrennungsluft eingehüllt, so daß im Moment der Verbrennung jeder Tropfen unabhängig von der Last ein örtliches Luftverhältnis von größer als 1 besitzt. Dadurch wird die Rußbildung vermindert und die Abgasqualität verbessert. In bekannten Dieselmotoren findet dagegen eine Verbrennung bei einem Luftverhältnis von kleiner als 1 statt.

Das Verfahren führt außerdem bereits in der Düse 8 zu einer Vorwärmung des Kraftstoffes, ergibt eine höhere Zündwilligkeit und ermöglicht die Verbrennung von Kraftstoffen niedriger Cetanzahl. Die Verbrennung läuft schneller ab, wobei gemäß Figur 9 mit einer höheren thermischen Leistung zu rechnen ist.

Es ist zu beachten, daß die "kritische" Strömung für zweiphasige Gemische wesentlich niedrigere Drücke benötigt als für die bekannten einphasigen Systeme. Daher können die später bei den Figuren 10 bis 13 beschriebenen Ausführungsformen der erfindungsgemäßen Vorrichtung beiniedrigeren Drücken betrieben werden, was zur Vereinfachung des gesamten Aufbaus des Kraftstoffeinspritzsystemes beiträgt.

Wie durch die Pfeile in den Figuren 3 bis 8 angedeutet, fließt zu Beginn der Verbrennung und bei maximalem Druck Frischluft von außerhalb der Verbrennungszone in den Luftspeicherraum 5 und wird dort gespeichert. Somit bleibt die Luftmenge bei der Verbrennung gleich. Es findet lediglic eine Verschiebung der zur Zerstäubung notwendigen Luftmenge zum nachfolgenden Verbrennungskreislauf hin und insbesondere im Vorkammerverfahren gemäß Figur 8 eine Verschiebung der Verbrennungsfront in Bewegungsrichtung statt. Diese Art der Frischluftverschiebung steigert die Homogenität und beschleunigt die Verbrennung. Durch Anordnung des Luftspeicherraumes 5 in unmittelbarer Nähe der Abgase kann die gespeicherte Frischluft erhitzt werden. Dementsprechend steigt der Druck im Speicherraum 5 an, was für die zweiphasige Zerstäubung von zusätzlichem Vorteil ist.

Eine wesentliche Verbesserung ist allerdings durch das sogenannte "Indirekt"-Verfahren zu erreichen, welches in Figur 7 schematisch angedeutet ist. Dort mündet die eigentliche Einspritzdüse 7 in einen der Vorkammer 10 ähnlichen geschlossenen Verdampfungsraum 11, in welchem der dosiert zugeführte Kraftstoff verdampft wird, bevor er in den Brennraum 3 gelangt. Die zeitlichen Abläufe des Druckes in diesem "Indirekt"-Verfahren sind in Figur 2a ebenfalls über den jeweiligen Kurbelwellenwinkel aufgetragen, wobei die Kurven I, K und L den Druck im Verdampfungsraum 11 bei Vollast, Teillast bzw. Vollast bei langsamer Entleerung darstellen.

Das Diagramm gemäß Fig. 2b unterhalb der Kurbelwellenwinkelangabe zeigt die Kurven M, N, O entsprechend den Kurven I, K, L. Das Kraftstoff-Luft-Gemisch wird aus der Düse 7 in den Verdampfungsraum 11 zu einem Zeitpunkt a eingespritzt, in welchem der entsprechende Kolben 2 gemäß der Kurve A gerade den Arbeitshub durchläuft. Bis zum Ende des nächsten Verdichtungshubes des entsprechenden Kolbens hat der dosierte und zerstäubte Kraftstoff genügend Zeit, um in dem Verdampfungsraum 11 zu verdampfen, wodurch der Gasdruck im Verdampfungsraum 11 entsprechend den Kurven I, K und L erheblich ansteigt.

Der Einspritzzeitpunkt d wird deshalb so eingestellt, daß der Kraftstoff im Verdampfungsraum 11 total verdampft ist. Da diese verfügbare Zeit sich über mehr als 3 Kolbenhübe ausdehnt, ist es nicht notwendig, den Einspritzzeitpunkt d dem Drehzahl- und Lastverhältnis anzupassen.

Am Ende des Verdichtungshubes öffnet das Ausblasventil 12 und das gasförmige Kraftstoff-Luft-Gemisch aus dem Verdampfungsraum 11 strömt schlagartig in den Brennraum aus. Ein durch die Eigenschaft des Verbrennungskreislaufes eines Dieselmotors bedingtes Ergebnis ist, daß sich der Gegendruck der Frischluft in dem Zylinder zu dem Zeitpunkt g der Kraftstoffdampfausströmung aus dem Verdampfungsraum 11 kaum ändert und daher auf die dosierte Kraftstoffmenge keinen Einfluß hat. Wie im übrigen das Ausblasventil 12 ausgestaltet ist, soll von nebengeordneter Bedeutung sein. Beispielsweise ist eine elektromagnetische Verstellung eines Nadelventils oder ein mechanisch über die Nockenwellendrehzahl angetriebener Schieber denkbar. Bevorzugte Ausführungsbeispiele sind später beschrieben.

Im Brennraum 3 vermischt sich das gasförmige Kraftstoff-Luft-Gemisch mit der komprimierten Frischluft und bildet vor dem Verbrennen ein in der Verbrennungszone homogenes Gemisch, welches schneller und vollkommener als in den bekannten Verfahren verbrennt. Dadurch wird die Abgasqualität wesentlich verbessert und die Rußbildung weitestgehend verhindert. Dadurch, daß der Kraftstoff schneller verbrennt (siehe Kurve H in Figur 9), werden höhere Drücke, geringere Kühlungsverluste und höhere Leistung erreicht. Dennoch sind, wie bereits erwähnt, die erforderlichen Einspritzdrücke niedriger und erfordern hinsichtlich des Einspritzzeitpunktes (a in Figur 2a) keine genaue Einstellung. Die Verdampfungswärme wird durch Kühlung der Brennwand entzogen und nicht, wie üblich, der Verbrennungswärme.

Prinzipiell ist es möglich, dieses "Indirekt"-Verfahren auch ohne Luftbeteiligung und nur durch Verdampfung des Kraftstoffes auszuführen, wie dies noch später beschrieben wird.

Der Druckverlauf im Luftspeicherraum 5 beim "Indirekten"-Verfahren ist im übrigen in Figur 1 durch die Kurven M, N und O dargestellt. Durch den Druckanstieg im Brennraum 3 strömt Frischluft in den Speicherraum 5 ein und wird dort gespeichert. Dadurch steigt im Zeitraum e bis f der Druck im Speicherraum 5. Dieser Anstieg ist vom maximalen Druck des Verbrennungsraumes abhängig. Daher ist der Druckanstieg im Speicherraum 5 beiniedriger Last gemäß der Kurve O in Figur 2b niedriger als bei Vollast entsprechend den Kurven M und N. In der Kurve M liegen die Punkte f und d zusammen. Dabei stellt Punkt d den frühest möglichen Einspritzzeitpunkt dar.

Die sogenannten zweiphasigen Einspritzdüsen unterscheiden sich von den bekannten Kraftstoffeinspritzdüsen durch die Luftströmung in der Düse. In den Figuren 10 bis 13 sind Querschnitte dieser Düsen zumindest teilweise dargestellt. Gemäß Figur 10 wird hier das Ausblasventil 12 von einer Düsennadel 14 gebildet. Die Luft wird innerhalb der Düsennadel 14 in einem Kanal 20 herangeführt und strömt durch Verschieben einer Scheibe 19 beim Anheben der Düsennadel 14 aus. Der Kraftstoff wird neben der Düsennadel 14 im Zulaufkanal 15 herangeführt.

Auch bei der Figur 11 dient eine Düsennadel 14 zur Herstellung des Ausblasventils. Die Zuführung von Luft erfolgt hier durch separate Lufteinströmkanäle 18.

In Figur 12 dagegen ist ein Speicherraum 13 als Ringkanal um den Zulaufkanal 15 herum angeordnet. Einerseits steht er über Lufteinströmöffnungen 16 mit dem Brennraum 3 in Verbindung, andererseits besitzt er entsprechende Einströmkanäle 9 und 18 zum Zulaufkanal 15 bzw. einem dem Ausblasventil vorgeschalteten Düsenraum.

Sowohl der Speicherraum 13 in Figur 12 wie auch die Einströmkanäle 9 in Figur 13 sind durch entsprechende Ventilelemente verschließbar.

Der von der Nadel 14 im Verdampfungsraum 11 eingeschlossene Kraftstoff enthält vor und nach der Einspritzzeit eine Menge Luft. Nur der über den Zulaufkanal 15 erneut zugeführte Kraftstoff beinhaltet während der Einspritzzeit keine Luft, zieht dagegen bei seiner beschleunigten Strömung Luft erst aus dem Speicherraum 5 bzw. 13 mit sich. Diese Anordnung verhindert, daß am Ende des Einspritzvorganges an der Düse Tropfen hängen bleiben.

Dadurch, daß das Volumen der einzuspritzenden Kraftstoffmenge im Verhältnis zur Luftmenge im Verbrennungsraum nur einige Promill beträgt, ist die notwendige Luftmenge zur zweiphasigen Zerstäubung sehr gering.

Ist jedoch mit der Anwendung des Verfahrens eine starke Verwirbelung und Homogenisierung des Kraftstoff-Luft-Gemisches beabsichtigt, so muß das Volumen des Speicherraums 5 bzw. 13 dementsprechend bei der Auslegung größer gewählt werden.

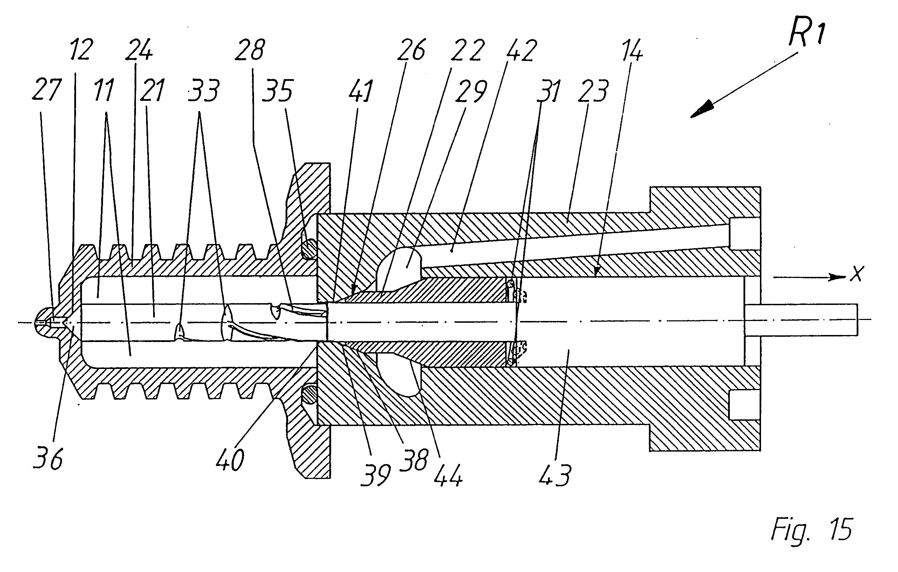

In den Figuren 15 bis 18 sind besonders bevorzugte Ausführungsbeispiele der Vorrichtung zum Einbringen von Kraftstoff in den Zylinder eines Motors gezeigt:

Die Vorrichtung R1 gemäß Figur 15 weist ein Einspritzgehäuse 23 auf, welches unter Einschaltung einer entsprechenden Ringdichtung 35 mit einem Verdampfungsgehäuse 24 verbunden ist. Die Düsennadel 14 durchsetzt sowohl das Einspritzgehäuse 23 wie auch den Verdampfungsraum 11 und bildet mit einer Spitze 36, welche eine Ausblasöffnung 37 verschließt, das Ausblasventil 12.

Im Bereich des Einspritzgehäuses 23 ist die Düsennadel 14 von einer Hülse 22 umfangen, mittels welcher ein zweites Ventil 26 ausgebildet wird. Hierzu besitzt die Hülse 22 eine dem Verdampfungsraum 11 zugewandte,sich verjüngende, konische Abschrägung 38, welche einem entsprechenden Trichter 39, der in eine Durchgangsbohrung 40 übergeht, angepaßt ist. Zwischen Trichter 39 und Durchgangsbohrung 40 befindet sich eine Steuerkante 41, welche beim Verschieben der Düsennadel 14 in Richtung x von Einspritznuten 28 in einem Nadelkolben 21 überfahren wird. Diese Nuten enden einerseits im Verdampfungsraum 11 in Prallnuten 33, andererseits stellen sie beim Verschieben der Düsennadel 14 in Richtung x eine Verbindung zwischen dem Verdampfungsraum 11 und einer Ringkammer 29 dar, welche zum Sammeln von über eine entsprechende Leitung 42 herbeigeführten, dosierten flüssigen Kraftstoff dient.

Paßungenauigkeiten zwischen dem Ausblasventil 12 und dem Ventil 26 werden im übrigen dadurch ausgeglichen, daß sich die Hülse 22 über entsprechende Druckfedern 31 gegen einen Nadelschaft 43 abstützt. Die Druckfedern 31 können Teller- oder Schraubenfedern sein.

Das Verfahren dieser sogenannten geschlossenen Verdampfung besteht in folgendem:

Dosierter Kraftstoff gelangt über die Leitung 42 in die Ringkammer 29. Infolge einer weiteren Hülsenabschrägung 44 wird durch das Einbringen des Kraftstoffes in die Ringkammer 29 ein Druck auf die Hülse 22 in Richtung x ausgeübt, der wiederum auf den Nadelschaft 43 übertragen wird. Hierdurch verschiebt sich die Düsennadel 14 zusammen mit der Hülse 22 in Richtung x, so daß die Nadelspitze 36 die Ausblasöffnung 27 freimacht. Hierdurch kann der im vorangegangenen Kreisprozeß in den Verdampfungsraum eingespritzte und innerhalb dieses Kreisprozeßzeitraumes in dem Verdampfungsraum 11 verdampfte Kraftstoff unter hohem Druck in den Brennraum 3 strahlenförmig ausströmen und wird nach einem kurzen Zündverzug verbrannt. Dieser Zündverzug ist wesentlich kürzer als bei der bekannten herkömmlichen Einspritzung von flüssigem Kraftstoff, insbesondere von Dieselkraftstoff in Dieselverbrennungsmotoren.

Beim Verschieben der Düsennadel 14 in Richtung x erfolgt gleichzeitig ein Abheben der Hülse 22 von dem trichterförmigen Ventilsitz 39 in dem Einspritzgehäuse 23. Da ferner die Einspritznuten 28 die Steuerkante 41 dieses Sitzventils 26 überfahren, wird eine Verbindung zwischen Verdampfungsraum 11 und Ringkammer 29 hergestellt, so daß dosierter flüssiger Kraftstoff in Form von Strahlen in den Verdampfungsraum 11 strömen kann und dort an der Wand einen Film bildet. Durch axiale Verschiebung der Einspritznuten 28 in dem Nadelkolben 21 kann der Beginn der Einspritzung gegenüber dem Ausblasvorgang um einige Kurbelwellenwinkel verzögert werden. Dies ist jedoch nicht unbedingt erforderlich.

Durch das Einströmen von dosiertem Kraftstoff in den Verdampfungsraum und durch dessen Verdampfung entsteht ein Druck in dem Verdampfungsraum 11, welcher wesentlich höher ist als der im Brennraum herrschende maximale Gasdruck. Wird dann die Ausblasöffnung 27 geöffnet, so dringt der verdampfte Kraftstoff sehr schnell in den Brennraum 3 ein, so daß sich der Druck in dem Verdampfungsraum 11 in etwa dem Druck im Brennraum 3 angleicht.

Je nach Art des Motoraufbaus und des eigentlichen Verbrennungsverfahrens hat es sich bei diesem vereinfachten Ausführungsbeispiel erwiesen, daß die mittlere Gastemperatur des Kraftstoffes im Verdampfungsraum 11 nicht ausreichend hoch ist, um eine Verdampfung des Kraftstoffes bei diesen hohen Druckverhältnissen zu ermöglichen. Zudem ist eine Zufuhr von zusätzlicher Verdampfungswärme nur auf den Arbeitshub begrenzt. Während des Ausschubhubes haben die Gase im Brennraum 3 durch ihre Entspannung zu niedrige Temperaturen und zu niedrige Wärmeübergangskoeffizienten, so daß keine nennenswerte Wärmeübertragung auf das Verdampfungsgehäuse bzw. den Verdampfungsraum 11 stattfinden kann.

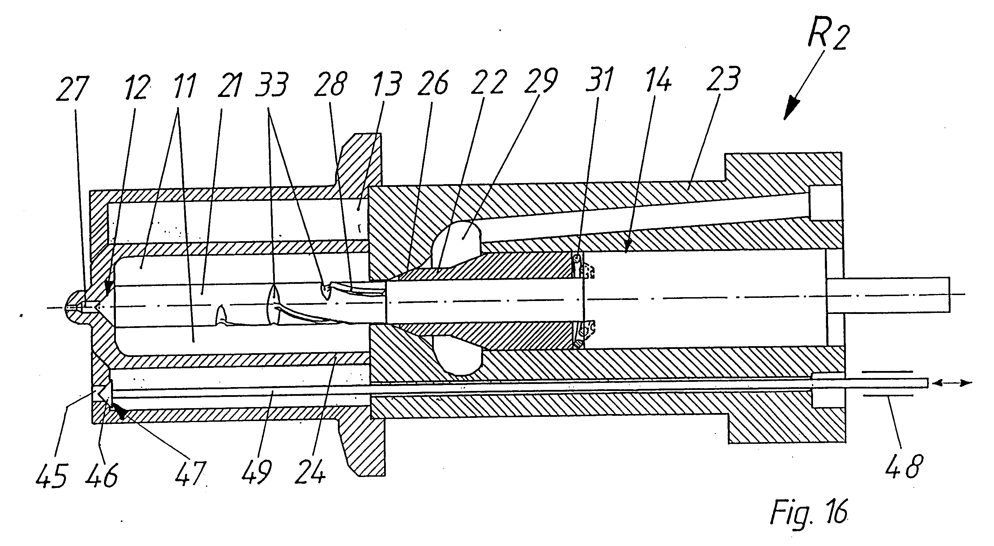

Diesem Nachteil hilft das Ausführungsbeispiel R2 gemäß Figur 16 ab. Gemäß diesem Ausführungsbeispiel ist der Verdampfungsraum 11 bzw. das Verdampfungsgehäuse 24 von dem aus Figur 12 bekannten Speicherraum 13 ummantelt. Dieser Speicherraum 13 besitzt zum Brennraum 3 hin eine Öffnung 45, welche in der gezeigten Gebrauchslage von dem Kegel 46 eines Sitzventils 47 verschlossen ist. Ein Öffnen der Öffnung 45 erfolgt über eine nur schematisch angedeutete Steuerung 48, wobei über eine Ventilstange 49 der Kegel 46 angehoben wird.

Bei dieser Vorrichtung R2 wird kurz nach Beginn des Verdichtungshubes die Öffnung 45 des Speicherraumes 13 zum Brennraum 3 hin kurz geöffnet, so daß die unter hohem Druck im Speicherraum 13 noch vorhandenen Gase, denen jedoch bereits ein Großteil ihrer Wärme vom Verdampfungsgehäuse 24 entzogen wurde, aus dem Speicherraum 13 in den Brennraum 3 ausströmen können. Danach wird bis zum Beginn der Verbrennung die Öffnung 45 geschlossen gehalten.

Wie oben beschrieben, wird gegen Ende des Verdichtungshubes durch ein Verschieben der Düsennadel 14 das Ausblasventil 12 geöffnet. Das Ausblasen des Kraftstoffdampfes aus dem Verdampfungsraum 11 in den Brennraum 3 beginnt. Gleichzeitig oder kurz danach beginnt das Einspritzen von dosiertem flüssigen Kraftstoff in den Verdampfungsraum 11.

Im oberen Totpunkt des Kolbens 2 wird der Speicherraum 13 durch Öffnen des Sitzventils 47 geöffnet, so daß heiße Gase aus dem Brennraum 3 unter hohem Druck in den Speicherraum 13 einströmen können. In diesem Speicherraum 13 verbleiben diese heißen Gase nach dem sofortigen Schließen der Öffnung 45, welches kurz nach Ablauf des maximalen Druckes in dem Brennraum 3 geschieht, bis zum Beginn des Verdichtungshubes des nächsten Kreisprozesses.

Somit erfolgt hier die Füllung des Speicherraumes 13 in einem fortgeschrittenen Stadium der Verbrennung, wobei die heißen Gase hauptsächlich aus Abgasen bestehen. Somit besteht die Aufgabe des Speicherraumes 13 nur in einer Verschiebung eines Teils der Wärmeenergie aus der Verbrennung bis zum Beginn der Verbrennung des nächsten Kreisprozesses. Dennoch bewirken die aus dem Speicherraum 13 freigelassenen Abgase bei der nachfolgenden Verbrennung eine Korrektur des ansonsten sehr kurze gewordenen Zündverzuges und einen größeren Zeitraum zum homogenen Verteilen vor der Verbrennung. Die Rußbildung der Abgase bewirkt auch eine Herabsetzung der Flammentemperatur und dadurch eine Verminderung der Stickoxide in den Abgasen.

Die Wärmeübertragung aus dem Speicherraum 13 erfolgt über das Verdampfungsgehäuse 24, wodurch sich auch eine Umwandlung des flüssigen Kraftstoffes zu Dampf im überkritischen Bereich vollzieht und eine Verkokung nicht stattfinden kann.

Bei diesem Verfahren werden von den herkömmlichen Einspritzdüsen bekannte Nachteile ausgeschaltet, wie z. B. Einfluß der Düsenlochänderung durch Alterung auf die Zerstäubungsqualität, Geometrie des Einspritzstrahles, Rußablagerung, Verkokung, Trompetenbildung, Erfordernis von zu hohen Zerstäubungsdrücken (bis 1.500 bar), Ölfilmverdünnung mit flüssigem Kraftstoff usw..

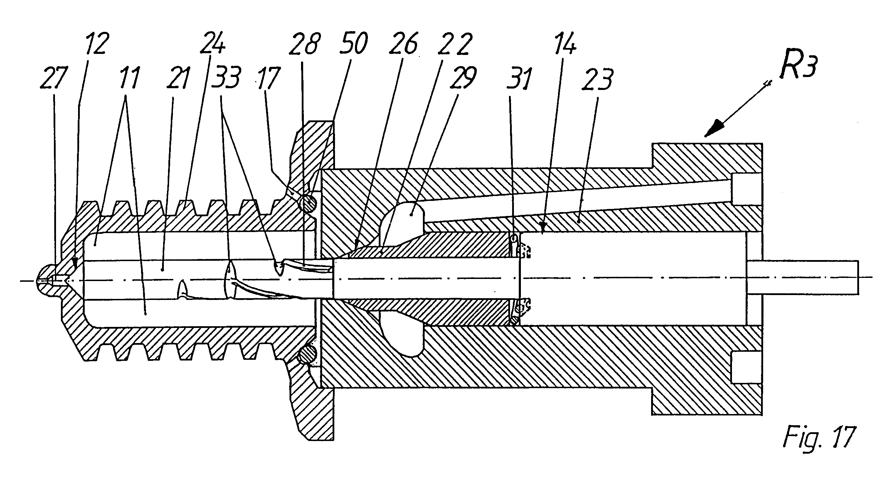

Durch eine weitere bevorzugte erfindungsgemäße Vorrichtung R3 entsprechend Figur 17 erfolgt eine sogenannte geschlossene Verdampfung mit Abgasrückführung. Wie oben beschrieben, wird zum Ausblasen des Kraftstoffdampfes aus dem Verdampfungsraum 11 die Düsennadel durch einen Anstieg des Druckes in der Ringkammer 29 angehoben, indem die Hülse 22 die Düsennadel 14 gegen den Druck einer nicht näher gezeigten Feder bewegt. Die Ausblasöffnung 27 wird freigegeben und ein Gemisch aus Kraftstoffdampf und Abgasen strömt aus dem Verdampfungsraum 11 in den Brennraum 3. Gleichzeitig oder kurz danach beginnt die erneute Einspritzung von dosiertem flüssigen Kraftstoff in den Verdampfungsraum 11.

Während des Ausblasens haben die Gase im Verdampfungsraum stets die gleiche Zusammensetzung. Nur der Gasdruck nimmt im Verdampfungsraum 11 infolge der Entleerung ab. Am Ende des Ausblasens gleicht sich der Druck im Verdampfungsraum 11 demjenigen im Brennraum 3 an. Nunmehr schließt das Ausblasventil 12 durch Rückführung der Düsennadel 14. Da jetzt die Verbrennung im Brennraum 3 beginnt, steigt der Druck im Brennraum 3 stark an, so daß er höher ist als der Druck im Verdampfungsraum 11. Aus diesem Grund öffnet sich ein nur schematisch angedeutetes Ventil 50, so daß heiße Gase aus dem Brennraum 3 in den Verdampfungsraum 11 gelangen können. Diese heißen Gase sind Produkte der Verbrennung im Brennraum 3 und bestehen daher hauptsächlich aus Abgasen. Diese heißen Abgase strömen solange in den Verdampfungsraum 11 hinein bis wiederum ein Druckausgleich zwischen Brennraum 3 und Verdampfungsraum 11 stattgefunden hat, wonach das Ventil 50 schließt. Somit ist das Schließen des Ventils erst nach Ablauf des maximalen Gasdruckes im Brennraum 3 im Laufe des Arbeitshubes möglich. Daher haben auch die zum Verdampfungsraum 11 geführten Abgase einen Druck und eine Temperatur, welche gleich dem maximalen Druck und der maximalen Temperatur im Brennraum 3 ist. Entsprechend muß diese Temperatur zwischen der Flammentemperatur und der mittleren Gastemperatur im Brennraum 3 zu diesem Zeitpunkt liegen.

Bis zum nächsten Ausblasen im nächsten Verbrennungsprozeß bleibt der Verdampfungsraum 11 hermetisch geschlossen. Dieser Zeitraum ist ausreichend, um den flüssigen Kraftstoff durch die Wärme der heißen, rückgeführten Gase zu verdampfen, wodurch wiederum der Druck in dem Verdampfungsraum soweit erhöht wird, daß das Gasgemisch aus dem Dampf des dosierten Kraftstoffes und den rückgeführten begasen in der vorgesehenen Ausblaszeit in den Brennraum 3 befördert werden kann.

Im Vergleich zu den Ausführungsbeispielen nach den Figuren 15 und 16 ist hier die Verdampfungstemperatur des Kraftstoffes wesentlich niedriger uni dementsprechend der Temperaturunterschied für den Wärmetransport größer. Die Wärmebelastung sowohl des flüssigen Kraftstoffes als auch des Verdampfungsgehäuses 24 ist niedriger. Die rückgeführten Abgase wirken als eine Art Verdünnungsgas uni sorgen daher für eine bessere Verteilung des Kraftstoffdampfes. Im Vergleich zu herkömmlichen Abgasrückführungen haben diese Abgase ein höheres Energiepotential, erfordern keinen technischen Aufwand und besitzen einen höheren Wirkungsgrad, da sie nur am gewünschten Ort vorhanden sind. Sie beeinträchtigen keinesfalls den Füllgrad des Brennraumes oder die Leistung des Zylinders.

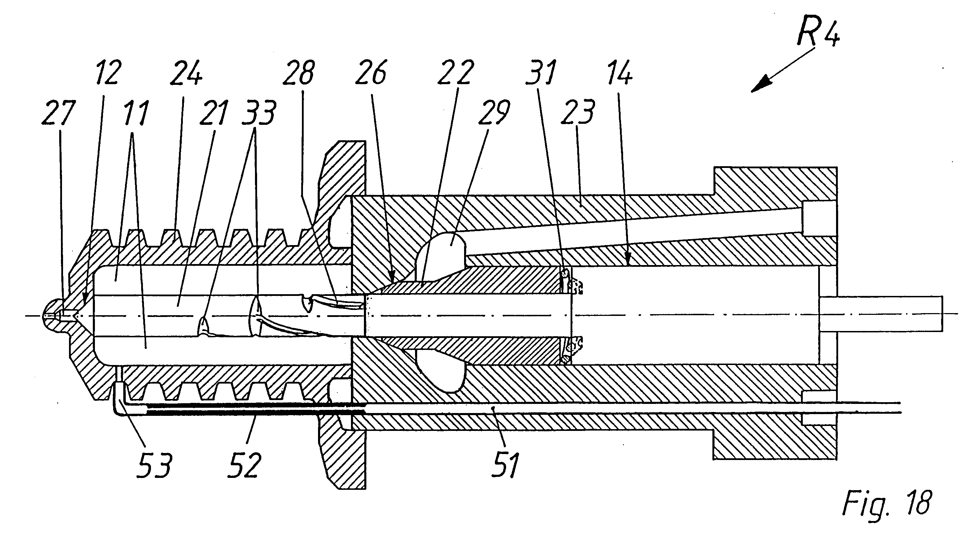

In einem weiteren Ausführungsbeispiel der Vorrichtung R4 gemäß Figur 18 ist eine geschlossene Verdampfung von Kraftstoff mit Wasserdampfzuführung gezeigt. Während bei dem Ausführungsbeispiel gemäß Figur 17 durch die Abgasrückführung ein Teil der Wärme aus der Verbrennung in dem laufenden Kreisprozeß zur Verdampfung des flüssigen Kraftstoffes vor der nächsten Verbrennung eingesetzt wird und die zurückgeführten Abgase als Druckgas zum Ausblasen des verdampften Kraftstoffes in dem nächsten Verbrennungszyklus benutzt werden, kann zu diesem Zwecke auch ein anderes inertes Gas Anwendung finden, welches unter hohem Druck in den Verdampfungsraum 11 eingefüllt wird. Damit die notwendigen Gasmengen gering gehalten werden und damit das Verfahren wirtschaftlich wird, sollte dieses inerte Gas ein niedriges Molekulargewicht haben. Die Anwendung von Wasser bietet dabei die zusätzliche Möglichkeit, die Wärmerückgewinnung aus den Abgasen zu verwirklichen.

Erfindungsgemäß wird Wasser von einer nicht gezeigten Hochdruckpumpe über eine Leitung den einzelnen Vorrichtungen R4 zugeführt. Diese Leitung kann bevorzugt in einem Abgaskrümmer (d. h. an der heißesten Stelle außerhalb eines Zylinders) verlegt sein, so daß das Wasser auf die Abgastemperatur erhitzt wird. Danach gelangt das Wasser in einen Kanal 51 innerhalb des Einspritigehäuses 23 und strömt kontinuierlich über eine Drosselstrecke 52. Nach diesere Drosselstrecke 52 wird das hocherhitzte Wasser durch Entspannung in Wasserdampf umgewandelt uni gelangt über einen Einfüllstutzen 53 in den Verdampfungsraum 11.

Wie bereits oben zu den anderen Verfahren beschrieben, wird zunächst das Ausblasventil 12 geöffnet. Hierdurch strömt dampfförmiges Kraftstoff-Wasser-Gemisch solange aus dem Verdampfungsraum 11 bis der Verdampfungsraum 11 sich bezüglich seines Innendruckes demjenigen des Brennraumes 3 angeglichen hat. Gleichzeitig oder kurz danach erfolgt ein Einspritzen von dosiertem Kraftstoff in den Verdampfungsraum 11. Am Ende dieser Einspritzung sind sowohl Ausblasventil 12 wie auch Ventil 26 wieder geschlossen. Allerdings bleibt der Anschluß an den Kanal 51 zur Zuführung von Wasserdampf geöffnet, so daß sich dieser Wasserdampf in dem Verdampfungsraum 11 mit dem verdampften Kraftstoff vermischen kann. Ähnlich wie bei den Abgasrückführungen bewirkt die Wasserdampfzufuhr zum Verdampfungsraum 11 eine Senkung der Verdampfungstemperatur des Kraftstoffes. Der vorhandene Temperaturunterschied reicht dann aus, um die gesamte Kraftstoff-Dosis zu verdampfen.

Auch bei diesem Verfahren bewirkt die Zuführung von Wasserdampf eine Korrektur des ansonsten stark reduzierten Zündzuges und ergibt eine bessere Verteilung des Kraftstoffdampfes durch Verdünnung mit dem Wasserdampf. Hierdurch wird die Rußbildung zusätzlich reduziert. Im Vergleich zu den vorangegangenen Ausführungsbeispielen werden hier keine Ventile oder Speicherräume benötigt.

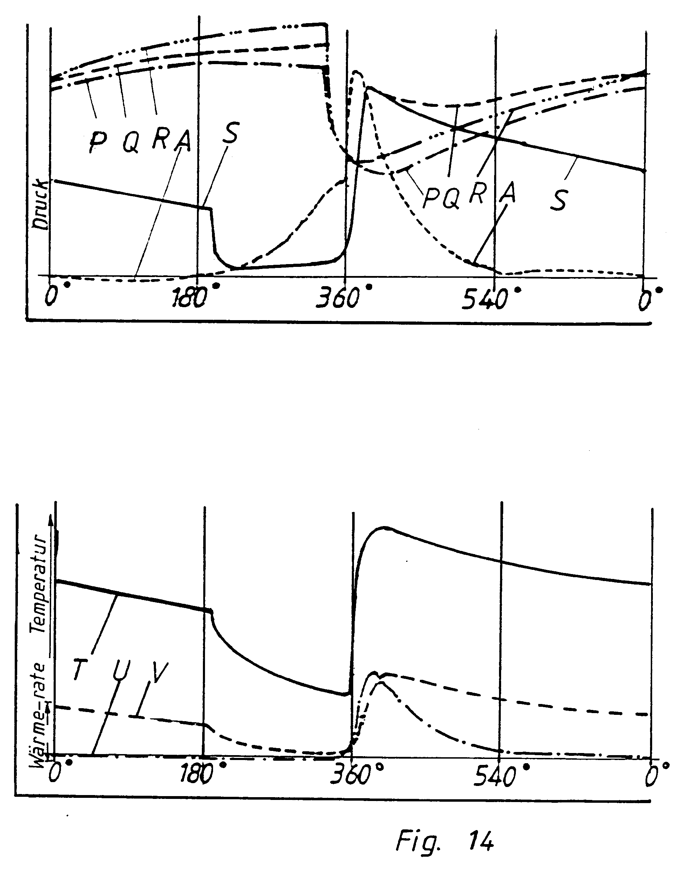

Die entsprechenden Kurvenverläufe sind in Figur 14 dargestellt. Mit A wiederum ist der Druckverlauf im Brennraum 3 gekennzeichnet. P ist der Druckverlauf im Verdampfungsraum 11 der Ausführungsbeispiele R1 und R2, Q derjenige im Verdampfungsraum 11 des Ausführungsbeispiels R3 und R derjenige im Verdampfungsraum 11 des Ausführungsbeispiels R4. Mit S ist der Druckverlauf im Speicherraum 13 des Ausführungsbeispiels R2 angedeutet. Im unteren Diagramm zeigt die Kurve T den Temperaturverlauf im Speicherraum 13 von R2, während die Kurven U und V die Wärmeübertragungsrate im Verdampfungsraum 11 der Ausführungsbeispiele R1 und R2 darstellt.

Hervorzuheben ist, daß durch den Einbau der erfindungsgemäßen Vorrichtung auch der Kaltstart des Motors wesentlich erleichtert ist und zudem auf ein Vorglühen und damit auf einen Einbau von Glühkerzen verzichtet werden kann.

Bekanntermaßen ist beim Kaltstart kein Kraftstoffdampf unter hohem Druck verfügbar. D. h. beim Öffnen des Ausblasventils 12 während dem ersten Ausblasen beim Kaltstart fließt durch die Ausblasöffnung 27 Frischluft in den Verdampfungsraum 11 hinein. Durch Drosselung dieser Luft beim Einströmen durch die Ausblasöffnung 27 in den ansonsten geschlossenen Verdampfungsraum 11 steigt die Temperatur der Frischluft an und wird höher als die Lufttemperatur im Brennraum 3. Diese erwärmte Luft bleibt zusammen mit dem eingespritzten dosierten Kraftstoff einen Kreislauf lang in dem Verdampfungsraum 11 eingeschlossen, wobei eine Verbrennung dieses Gemisches stattfindet. Diese Verbrennung in dem Verdampfungsraum 11 bei der ersten Umdrehung der Kurbelwelle sorgt durch die dadurch entstehende Verbrennungswärme für die Verdampfung des restlichen Kraftstoffanteils, für eine Anhebung des Gasdruckes in dem Verdampfungsraum 11 auf den erforderlichen Wert und führt eine Erwärmung des Verdampfungsgehäuses 24 auf den Wert beinormalem Folgebetrieb. Nach dieser Umdrehung hat somit die erfindungsgemäße Vorrichtung samt Verdampfungsraum 11 einen Zustand wie bei Normalbetrieb erreicht.

## Patentansprüche

1. Verfahren zum Betreiben einer Ein- oder Mehrzylinder-Brennkraftmaschine, insbesondere mit selbstzündendem Kraftstoff, wobei dosierter Kraftstoff vor der Zufuhr zu einem Brennraum in einen (hermetisch) geschlossenen Verdampfungsraum eingespritzt wird, dadurch gekennzeichnet, daß der Kraftstoff dort in dem Verdampfungsraum für die Dauer fast eines ganzen Kreisprozesses verbleibt und verdampft wird, jedoch kurz vor Ende des Verdichtungshubes in den Brennraum durch Öffnen eines Ventiles zwischen Verdampfungsraum und Brennraum entlassen wird, und daß das Ventil zwischen Verdampfungsraum und Brennraum noch vor der Zündung des Kraftstoffes am Ende des Verdichtungshubes wieder geschlossen wird und erst zum Ausblasen im nächsten Kreisprozeß geöffnet wird.

2. Verfahren nach Anspruch 1, dadurch gekennzeichnet, daß komprimiertes Gas aus dem Brennraum einem Speicherraum zugeführt wird, welcher den Verdampfungsraum ummantelt und dieses Gas als Wärme zur Verdampfung des Kraftstoffes in dem Verdampfungsraum benutzt wird.

3. Verfahren nach Anspruch 1, dadurch gekennzeichnet, daß das bei der Verbrennung entstehende Gas

EP 0 398 964 B1

zum Zeitpunkt seines maximalen Druckes und seiner maximalen Temperatur dem Speicherraum zugeführt und dort eingeschlossen wird.

4. Verfahren nach Anspruch 3, dadurch gekennzeichnet, daß der Speicherraum mit Beginn des Verdichtungshubes des nachfolgenden Kreisprozesses kurzzeitig zur Entleerung geöffnet wird.

5. Verfahren nach einem der Ansprüche 1 bis 4, dadurch gekennzeichnet, daß der Innendruck des Verdampfungsraumes erhöht wird.

6. Verfahren nach Anspruch 5, dadurch gekennzeichnet, daß dem Verdampfungsraum das komprimierte Gas aus dem Speicherraum zugeführt wird.

7. Verfahren nach wenigstens einem der Ansprüche 1 bis 6, dadurch gekennzeichnet, daß das komprimierte Gas aus dem Speicherraum mit dosiertem Kraftstoff während des Einspritzens in Form eines zweiphasigen Gemisches vermischt wird, daß das zweiphasige Gemisch in einem sogenannten "Indirekt"-Verfahren in einen Verdampfungsraum eingespritzt wird, bevor das Kraftstoffdampf-Luftgemisch am Ende des Verdichtungshubes des darauffolgenden Kreislaufs der komprimierten Frischluft zur Verbrennung zugeführt wird.

8. Verfahren nach wenigstens einem der Ansprüche 1 bis 6, dadurch gekennzeichnet, daß das zweiphasige Gemisch in einem sogenannten "Direkt"-Verfahren ohne Verdampfung direkt in den Verbrennungsraum des jeweiligen Zylinders im nächsten Kreislauf zur Verbrennung eingespritzt wird.

9. Verfahren nach wenigstens einem der Ansprüche 1 bis 8, dadurch gekennzeichnet, daß inerte Gase oder Wasserdampf unter hohem Druck von außen dem Verdampfungsraum zugeführt werden.

10. Vorrichtung zum Einbringen von insbesondere selbstzundendem Kraftstoff in einen Brennraum einer Ein oder Mehrzylinder-Brennkraftmaschine mittels einer Einspritzdüse für dosiert zugeführten Kraftstoff, wobei zwischen der Einspritzdüse und dem Brennraum ein Verdampfungsraum angeordnet ist und dosierter Kraftstoff über ein Ventil aus der Einspritzdüse in den Verdampfungsraum gelangt und eine Ausblasöffnung aus dem Verdampfungsraum zum Brennraum hin ebenfalls durch ein Ventil verschließbar ist, dadurch gekennzeichnet, daß das Ventil (26) und auch das Ventil (12) durch eine Düsennadel (14) im Zusammenwirken mit dem Einspritzgehäuse (23) und dem Verdampfungsgehäuse (24) gebildet sind.

11. Vorrichtung nach Anspruch 10, dadurch gekennzeichnet, daß die Düsennadel (14) mit einem Nadelkolben (21) den Verdampfungsraum (11) durchsetzt und mit einer Nadelspitze (36) die Ausblasöffnung (27) verschließt.

12. Vorrichtung nach Anspruch 11, dadurch gekennzeichnet, daß der Nadelkolben (21) andererseits auch in das Einspritzgehäuse (23) eingreift und in der Durchgangsbohrung (40) geführt ist, wobei diese Durchgangsbohrung (40) sich nach einer Steuerkante (41) trichterförmig erweitert.

13. Vorrichtung nach Anspruch 12, dadurch gekennzeichnet, daß in den Nadelkolben (21) Einspritznuten (28) eingestochen sind, welche sich von einem Bereich nahe der Steuerkante (41) bis in den Verdampfungsraum (11) erstrecken.

14. Vorrichtung nach Anspruch 12 oder 13, dadurch gekennzeichnet, daß dem Nadelkolben (21) nach der Steuerkante (41) eine Hülse (22) aufgeschoben ist, die zur Steuerkante (41) hin eine konische Abschrägung (38) aufweist, welche der trichterförmigen Erweiterung (39) entspricht, wobei die Abschrägung (38) und die Erweiterung (39) zusammen das Ventil (26) ausbilden, und daß der Nadelkolben (21) bzw. die Hülse (22) innerhalb einer Ringkammer (29) sich durch eine Abschrägung (44) erweitern, wobei diese Abschrägung (44) eine Druckfläche für den in die Ringkammer (29) eindringenden Kraftstoff bildet, und daß sich die Hülse (22) über eine Druckfeder (31) od. dgl. Kraftspeicher gegen einen mit dem Nadelkolben (21) verbundenen Nadelschaft (43) abstützt.

15. Vorrichtung nach wenigstens einem der Ansprüche 10 bis 14, dadurch gekennzeichnet, daß der Verdampfungsraum (11) mit einem Speicherraum (5) für Frischluft und/oder Abgase in Verbindung steht, wobei der Speicherraum (5) ggfs. über ein Ventil (17) mit dem Brennraum (3) in Verbindung steht.

16. Vorrichtung nach wenigstens einem der Ansprüche 10 bis 15, dadurch gekennzeichnet, daß der Verdampfungsraum (11) über einen Kanal (51) mit heißem Wasserdampf beaufschlagbar ist, wobei in dem Kanal (51) eine Drosselstrecke (52) angeordnet ist.

17. Vorrichtung nach wenigstens einem der Ansprüche 10 bis 16, dadurch gekennzeichnet, daß der Verdampfungsraum (11) von einem Speicherraum (13) ummantelt ist, welcher über eine Öffnung (45) mit dem Brennraum (3) in Verbindung steht, wobei die Öffnung (45) durch ein Ventil (47) verschließbar ist.

## Claims

1. Process for operating a single-cylinder or multi-cylinder internal combustion engine, in particular with spontaneously igniting fuel, metered fuel being injected, before being supplied to a combustion chamber, into a (hermetically) sealed vaporisation chamber, characterised in that the fuel remains in the vaporisation chamber

11

for the duration of almost a complete cycle and is vaporised but, just before the end of the compression stroke, is released into the combustion chamber by opening a valve between the vaporisation chamber and the combustion chamber and in that the valve is closed again between vaporisation chamber and combustion chamber before ignition of the fuel at the end of the compression stroke and is only opened in the next cycle for exhaust purposes.

2. Process according to claim 1, characterised in that compressed gas from the combustion chamber is supplied to a storage chamber which surrounds the vaporisation chamber and this gas is used in the vaporisation chamber as heat for vaporising the fuel.

3. Process according to claim 1, characterised in that the gas formed during combustion is supplied, at the moment of its maximum pressure and its maximum temperature, to the storage chamber and is enclosed there.

4. Process according to claim 3, characterised in that the storage chamber is briefly opened for evacuation at the beginning of the compression stroke of the subsequent cycle.

5. Process according to one of claims 1 to 4, characterised in that the internal pressure in the vaporisation chamber is increased.

6. Process according to claim 5, characterised in that the compressed gas from the storage chamber is supplied to the vaporisation chamber.

7. Process according to at least one of claims 1 to 6, characterised in that the compressed gas from the storage chamber is mixed with metered fuel during injection in the form of a two-phase mixture, in that the two-phase mixture is injected in a so-called indirect process into a vaporisation chamber before the mixture of fuel vapour and air is supplied to the compressed fresh air for combustion at the end of the compression stroke of the subsequent cycle.

8. Process according to at least one of claims 1 to 6, characterised in that the two-phase mixture is injected in a so-called direct process, without vaporisation, directly into the combustion chamber of the respective cylinder in the next cycle for combustion.

9. Process according to at least one of claims 1 to 8, characterised in that inert gases or steam are supplied under high pressure from the exterior to the vaporisation chamber.

10. Device for introducing, in particular, spontaneously igniting fuel into a combustion chamber of a single-cylinder or multi-cylinder internal combustion engine by means of an injection nozzle for fuel which is supplied in metered form, wherein a vaporisation chamber is arranged between the injection nozzle and the combustion chamber and metered fuel passes via a valve from the injection nozzle into the vaporisation chamber and an exhaust opening from the vaporisation chamber to the combustion chamber can also be sealed by a valve, characterised in that the valve (26) and also the valve (12) are formed by a nozzle needle (14) in cooperation with the injection housing (23) and the vaporisation housing (24).

11. Device according to claim 10, characterised in that the nozzle needle (14) passes through the vaporisation chamber (11) with a needle piston (21) and closes the exhaust opening (27) with a needle tip (36).

12. Device according to claim 11, characterised in that the needle piston (21) on the other hand also engages in the injection housing (23) and is guided in the through-bore (40), this through-bore (40) widening in the form of a funnel after a control edge (41).

13. Device according to claim 12, characterised in that injection grooves (28) are recessed in the needle piston (21) and extend from a region close to the control edge (41) into the vaporisation chamber (11).

14. Device according to claim 12 or 13, characterised in that on the needle piston (21) after the control edge (41) there is a slipped a sleeve (22) having a conical bevel (38) corresponding to the funnel-shaped enlargement (39) toward the control edge (41), the bevel (38) and the enlargement (39) together forming the valve (26), and in that the needle piston (21) and the sleeve (22) are widened within an annular chamber (29) by a bevel (44), this bevel (44) forming a pressure face for the fuel penetrating the annular chamber (29), and in that the sleeve (22) rests via a compression spring (31) or similar energy store against a needle shank (43) connected to the needle piston (21).

15. Device according to at least one of claims 10 to 14, characterised in that the vaporisation chamber (11) communicates with a storage chamber (5) for fresh air and/or exhaust gases, the storage chamber (5) optionally communicating via a valve (17) with the combustion chamber (3).

16. Device according to at least one of claims 10 to 15, characterised in that the vaporisation chamber (11) can be loaded via a channel (51) with hot steam, a throttle section (52) being arranged in the channel (51).

17. Device according to at least one of claims 10 to 16, characterised in that the vaporisation chamber (11) is surrounded by a storage chamber (13) which communicates via an opening (45) with the combustion chamber (3), the opening (45) being sealable by a valve (47).

## Revendications

1. Procédé de mise en oeuvre d'un moteur à combustion interne à un ou plusieurs cylindres notamment avec un combustible à auto-allumage, procédé selon lequel le carburant dosé est injecté dans une chambre de vaporisation, fermée (hermétiquement) avant d'être fourni à une chambre de combustion, caractérisé en ce que le carburant reste dans la chambre de vaporisation pour une durée correspondant pratiquement à un cycle complet et se vaporise, mais peu de temps avant la fin de la course de compression, il est introduit dans la chambre de combustion par l'ouverture d'une soupape entre la chambre de vaporisation et la chambre de combustion et en ce que cette soupape est de nouveau fermée avant l'allumage du carburant à la fin de la course de compression et n'est ouverte que pour l'échappement au cours du cycle suivant.

2. Procédé selon la revendication 1, caractérisé en ce que le gaz comprimé est fourni de la chambre de combustion à une chambre collectrice qui entoure la chambre de vaporisation et utilise ce gaz comme chaleur de vaporisation du carburant dans la chambre de vaporisation.

3. Procédé selon la revendication 1, caractérisé en ce que le gaz formé par la combustion est fourni à la chambre d'accumulation au moment de sa pression maximale et de sa température maximale, pour y être enfermé.

4. Procédé selon la revendication 3, caractérisé en ce que la chambre d'accumulation est ouverte pendant un court instant au début de la course de compression au cours du cycle suivant, pour qu'elle se vide.

5. Procédé selon l'une des revendications 1 à 4, caractérisé en ce qu'on augmente la pression interne de la chambre de vaporisation.

6. Procédé selon la revendication 5, caractérisé en ce que la chambre de vaporisation reçoit le gaz comprimé de la chambre d'accumulation.

7. Procédé selon au moins l'une des revendication 1 à 6, caractérisé en ce que le gaz comprimé de la chambre d'accumulation est mélangé au carburant dosé pendant l'injection sous la forme d'un mélange à deux phases qui est injecté dans la chambre de vaporisation selon un procédé "indirect", avant qu'à la fin de la course de compression du cycle suivant, le mélange vapeur de carburant-air ne soit fourni à l'air frais, comprimé, pour brûler.

8. Procédé selon au moins l'une des revendications 1 à 6, caractérisé en ce que le mélange à deux phases est injecté selon le procédé "direct" sans vaporisation, directement dans la chambre de combustion du cylindre respectif au cours du cycle suivant pour brûler.

9. Procédé selon au moins l'une des revendications 1 à 8, caractérisé en ce qu'un gaz inerte ou de la vapeur d'eau sont fournis sous pression élevée, de l'extérieur, à la chambre de vaporisation.

10. Dispositif pour introduire en particulier du carburant à auto-allumage dans une chambre de combustion d'un moteur à combustion interne à un ou plusieurs cylindres à l'aide d'un injecteur pour une alimentation dosée de carburant, une chambre d'évaporation étant prévue entre l'injecteur et la chambre de combustion et le carburant dosé arrivant par une soupape de l'injecteur dans la chambre de vaporisation et un orifice d'éjection de la chambre de vaporisation vers la chambre de combustion, pouvant également être fermé par une soupape, dispositif caractérisé en ce que la soupape (26) et la soupape (12) sont réalisés par une aiguille d'injecteur (14) coopérant avec le corps d'injecteur (23) et le carter d'évaporateur (24).

11. Dispositif selon la revendication 10, caractérisé en ce que l'aiguille d'injecteur (14) traverse avec un piston en aiguille (21), la chambre de vaporisation (11) et ferme l'orifice d'éjection 27 par une pointe d'aiguille (36).

12. Dispositif selon la revendication 11, caractérisé en ce que le piston en forme d'aiguille (21) pénètre par ailleurs, également dans le corps (23) de l'injecteur et guidé dans un perçage traversant (40), ce dernier s'élargissant en forme d'entonnoir en aval d'une arête de commande (41).

13. Dispositif selon la revendication 12, caractérisé par des rainures d'injection 28 taillées dans le piston en forme d'aiguille (21), rainures qui s'étendent d'une zone proche de l'arête de commande (41) jusque dans la chambre de vaporisation (11).

14. Dispositif selon les revendications 12 ou 13, caractérisé en ce qu'un manchon (22) est emmanché sur le piston en forme d'aiguille (21) en aval de l'arête de commande (41), manchon qui présente une surface (38) en biseau conique en direction de l'arête de commande (41) et qui correspond à l'élargissement en entonnoir (39), la surface en biseau conique (38) et l'élargissement (39) formant par coopération une soupape (26) et le piston en forme d'aiguille (21) et le manchon (22) s'élargissant dans une chambre annulaire (29) par une surface en biseau (44) et cette dernière forme une surface de pression pour le carburant pénétrant dans la chambre annulaire (29) et le manchon (22) s'appuie par un ressort de compression (31) ou accumulateur de force, analogue, contre un corps d'aiguille (43) relié au piston formant l'aiguille (21).

15. Dispositif selon au moins l'une des revendications 10 à 14, caractérisé en ce que la chambre de vaporisation (11) communique avec une chambre d'accumulation (5) pour l'air frais et/ou les gaz d'échappement, la chambre d'accumulation (5) communiquant le cas échéant par une soupape (17) avec la chambre de combustion (7).

16. Dispositif selon au moins l'une des revendications 10 à 15, caractérisé en ce que la chambre de vaporisation (11) reçoit de la vapeur d'eau, chaude, par l'intermédiaire d'un canal (51), muni d'un point d'étranglement (52).

17. Dispositif selon au moins l'une des revendications 10 à 16, caractérisé en ce que la chambre de vaporisation (11) est entourée d'une chambre d'accumulation (13) qui communique avec la chambre de combustion (3) par une ouverture (45), cette dernière pouvant être fermée par une soupape.

Fig. 1

Fig. 2b

Fig. 2a

EP 0 398 964 B1

Fig. 3

Fig. 4

Fig. 5

Fig. 6

16

Fig. 7          Fig. 8

9
5
7
3
11   10
12   17
3
4
2
6

EP 0 398 964 B1

Fig. 9

Druck

Volumen

E
F
G
H

Fig. 10

20
14
15
19

Fig. 11

14
9
18

15

14

13

9

17

16

18

*Fig. 12*

14

9

17

11

*Fig. 13*

Fig. 14

Fig. 15

Fig. 16

Fig. 17

Fig. 18

EP 0 398 964 B1